# EUROPEAN PATENT APPLICATION

(11) **EP 1 972 559 A1**
(43) Date of publication of application: **24.09.2008**
(21) Application number: 07425155.4
(22) Date of filing: 19.03.2007
(51) Int. Cl.: B65B 43/42, B65G 47/02

(54) **A loading device for packaging trays, in particular trays for packaging fruit products, and a machine for packaging articles comprising the loading device**

(71) Applicant: B. Longobardi Srl., 39011 Lana (Bolzano) (IT)
(72) Inventor: Longobardi, Robert, 39011 Lana (Bolzano) (IT)
(74) Representative: Gotra, Stefano

(57) **Abstract**

A loading device (1) of trays (5), in particular celled trays for packaging vegetable and fruit products, comprises means for transferring (19) for displacing at least a tray (5) from a collection zone (20) to a depositing zone (21), in which the collected tray (5) is placed on an advancement line (9) of a machine (2) for fruit packing. The device (1) comprises a temporary stationing zone (20) for at least a tray (5) interposed between the collection zone (2) and the depositing zone (21). The stationing zone (23) is predisposed to receive at least a tray (5) for contemporaneously enabling a positioning of a further tray (5) in the collection zone (20) and an advancing of a tray (5) along the advancement line (9) of the machine (2).

## Description

The invention relates to a loading device for packaging trays, in particular trays for packaging vegetable and fruit products.

The invention also relates to a machine for packing articles provided with the loading device.

The invention applies to the industrial sector of machines, plants and/or devices for processing, treating and packing fruit produce, destined for large-scale distribution.

In particular the invention relates to packing articles of vegetable and fruit and/or fruit produce such as for example moderate-sized fruits of a nearly-spherical type (apples, oranges, mandarin oranges and the like) in special crates.

As is known, packing fruit, and in particular apples, in crates is generally done using special trays made of a flexible material or a non-flexible material (for example wood pulp) provided with a plurality of cells for ordered housing of the fruit to be packed.

Generally, machines are known in which the packing of the apples is done by special machines comprising a combined line advancement system for the fruit, trays and crates, each of which lines is supplied by a respective loading station.

Usually the fruit advancing lines and the celled trays are superposed and converge at a terminal zone of the advancement line of the fruit, so that the fruit is arranged by force of gravity onto the underlying cells of the trays. The advancement line of the trays extends beyond the convergence zone to constitute a further advancement line dedicated to the advancing of the trays filled with the supplied fruit.

Similarly to the above-described structure, the advancement line of the filled trays superposes the advancement line of the containing crates up to a convergence zone corresponding to a terminal zone of the advancement line of the filled trays.

When the filled trays reach the zone of convergence, between the corresponding advancement line and the advancement line of the crates, the trays bearing the fruit are eased into the containing crates, which continue towards an outlet conveyor.

Generally the tray loading station comprises one or more storage feeders constituted by rest planes on which the trays to be supplied to the machine are piled- in an orderly way, one above another. The loading station of the celled trays is further provided with mobile means for transferring one of the trays from one of the piles in the storage between a tray intercept and gripping position and a tray depositing position at which the tray taken from the storage is released onto the advancement line.

Although the known loading stations enable automated transfer of trays infeeding to the respective advancement lines of the packaging machine, the Applicant has noticed that they are not free of drawbacks and can therefore be improved upon in some aspects thereof, mainly in relation to the speed of transfer from the gripping zone to the depositing zone, as well as in relation to delays in the packaging stage and the costs related thereto.

In particular, the Applicant has noticed that the means for transferring normally used on machines for fruit packing, such as the one described herein above, significantly slow down the packaging cycle of the fruit as due to physical limitations related to the structural configuration thereof, the means for transferring are forced to perform a high number of movements in order to move the trays.

In more detail, the means for transferring must initially move in correspondence with the trays to be collected in order to intercept and grip the tray to be moved. Thereafter the means for transferring must raise the tray gripped from the underlying pile in order to transfer the tray to the advancement line of the machine to be supplied. Then the means for transferring must lower the tray in order to release it on the advancement line. Finally the means for transferring must return along the transfer trajectory to intercept and grip a next tray to be transferred.

Naturally the above-described transfer mode of the trays exhibits relatively slow actuation times which reflect negatively on the packaging costs of the fruit.

The aim of the present invention is to resolve the problems encountered in the prior art.

A further aim of the invention is to provide a loading device which speeds up the supply of the trays of the machine for fruit packaging to the advancement line.

A further aim of the present invention is to optimise the supply of the trays, lowering the packaging costs normally associated to the functioning of the means for transferring.

The specified technical aim and the set objectives are all substantially attained by a loading device for trays, in particular celled trays for packaging fruit products, which comprises the characteristics set out in the characterising part of claim 1.

The technical aim is further attained by a method for packing articles, in particular vegetable and fruit products, comprising the characteristics expressed in the characterising part of claim 19.

Further characteristics and advantages will better emerge from the detailed description that follows of a preferred but non-exclusive embodiment of a loading device for trays, in particular celled trays for vegetable and fruit products, as well as a machine for packaging the articles provided with the device of the present invention. The description will be made herein below with reference to the accompanying figures of the drawings, provided by way of non-limiting example, in which:
Figure 1 is a perspective view of a machine for packing articles, in particular vegetable and fruit articles, provided with a loading device of the trays, according to the present invention;
Figure 2 is a perspective view from above of the loading device of the preceding figure;
Figure 3 is a perspective view from below of the loading device of the preceding figures;
Figure 4 is a further perspective view from below of the loading device of the preceding figures.

With reference to the figures of the drawings, 1 denotes in its entirety a loading device for trays, in particular celled trays for vegetable and fruit products, in agreement with the present invention.

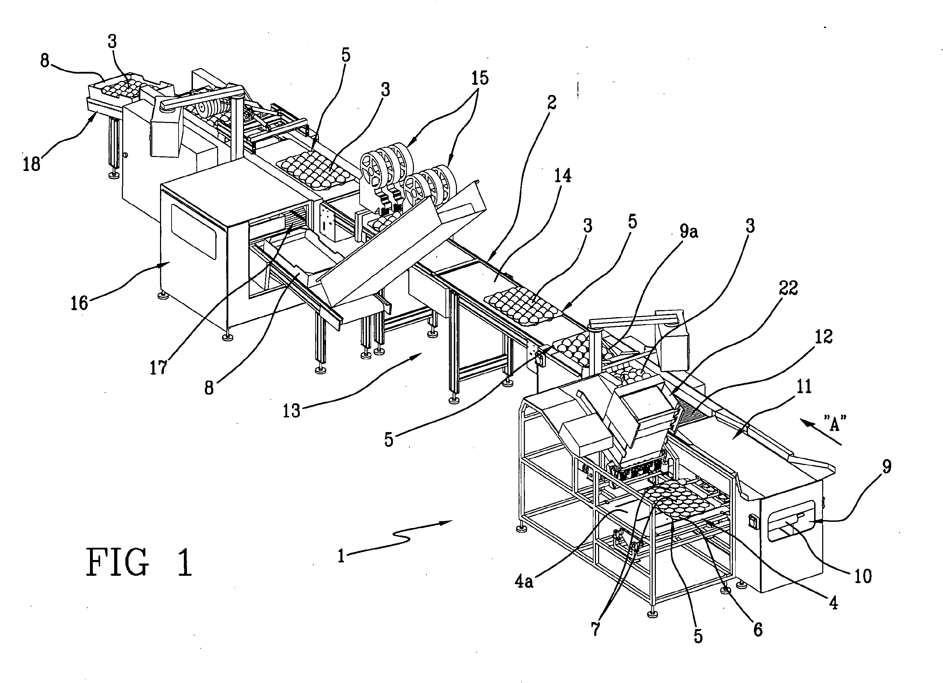

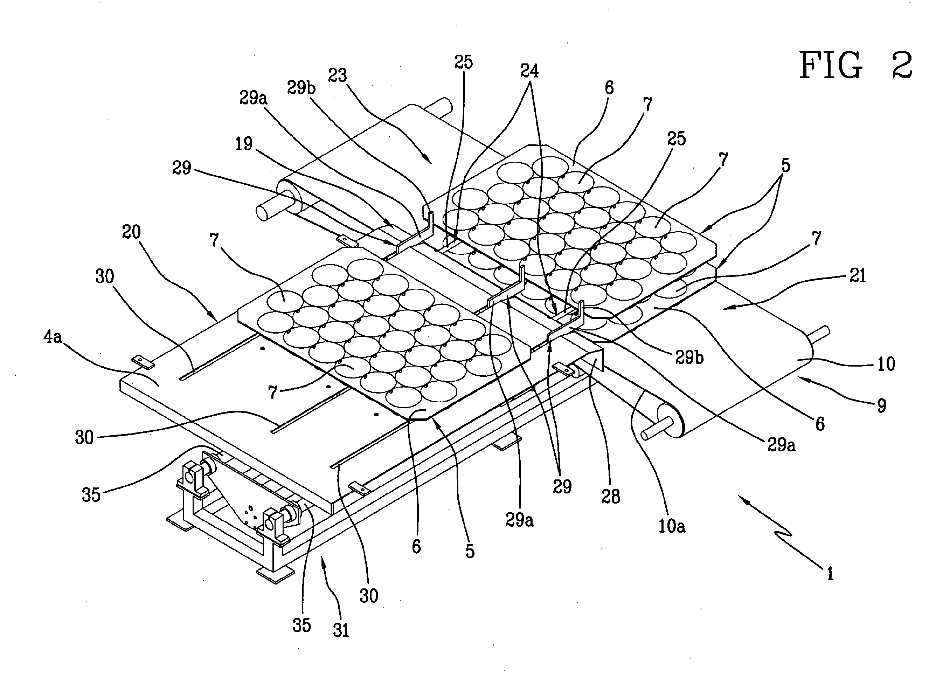

With reference to figure 1, 2 denotes a machine 2 for packing articles 3, in particular vegetables and fruits of overall modest size and being substantially spherical or rounded, such as apples, oranges, mandarin oranges and the like.

The machine 2 comprises a first loading station 4 for infeeding trays 5 each of which exhibits a structure 6 which is substantially flat, and at least a cell 7, advantageously a plurality of cells 7, for ordered housing of single vegetables or fruits 3 to be packed in special crates 8.

The first loading station 4 supplies the trays 5 to a first advancement line 9 which extends preferably by a side of the first loading station 4 along a substantially straight direction A which is the advancement direction of the trays 5. Advantageously the first advancement line 9 comprises at least a conveyor belt 10 which extends horizontally along the above-mentioned advancement direction A. Naturally, the first advancement line 9 can be realised using any other conveyor suitable for advancement of the trays 5.

The machine 2 comprises a second loading station (not illustrated in the figures of the drawings) which is deputed to supplying the above-mentioned vegetables or fruits 3 (hereinafter referred-to generically as fruits) to be placed in the cells 7 of the trays 5. The second loading station provides a continuous supply of fruits 3 to be packed to a second advancement line 11 which extends preferably in a substantially straight direction, advantageously coinciding with the advancement direction A of the trays 5 along the first advancement line 9. The second advancement line 11 is preferably superposed on the first advancement line 9 so that the fruit articles proceed, substantially parallel, above the trays 5.

In the embodiment illustrated in figure 1, the second advancement line 11 includes the use of a conveyor 12, partially constituted by rollers, which develops horizontally above the conveyor belt 10 of the first advancement line 9, to facilitate the advancement of the fruits 3 launched from the second loading station.

The first and second advancement lines 9, 11, converge to one another along the advancement direction A in order to perform the housing of the fruits 3 in the cells 7 of the trays 5 being supplied.

In particular, the first advancement line 9 exhibits an inclined tract 9a which develops from the belt 10 and terminates approximately at the same level as the roller conveyor 12 of the second advancement line 11.

In order better to define the convergence zone of the above-mentioned advancement lines 9, 11, it is preferable that the second advancement line 11 terminates with a sliding portion (not visible in the figures) inclined towards the first advancement line 9, approximately at the inclined tract 9a thereof.

The structural configuration of the convergence zone of the first and second advancement lines 9, 11 determines the raising of the trays 5 and the contemporaneous descent of the fruits 3 which are then orderedly arranged internally of the cells 7 of the trays 5.

Still with reference to figure 1, the machine 2 comprises a first outlet line 13, preferably constituted by a conveyor belt 14 extending from the conveying zone of the first and the second advancement lines 9, 11 along the advancement direction A, for advancing the trays 5 provided with the -supplied fruits 3. In greater detail, the first outlet line 13 constitutes a substantially horizontal prolongation of the first advancement line 9 starting from the inclined tract thereof.

Labelling devices 15 are advantageously arranged along the first outlet line 13, which devices 15 apply labels on each fruit article 3 on the trays 5; the labels might be for recognition of the produce being packed.

The first outlet line 13 extends beyond the labelling devices 15 by a side of a third loading station 16 dedicated to the supply of the above-mentioned crates 8 of the trays 5.

In particular, the third loading station 16 supplies the crates 8 to a third advancement line 17, also preferably constituted by one or more roller conveyors and extending prevalently along the advancement direction A.

As can be seen in figure 1, the third advancement line 17 develops inferiorly of the first outlet line 13 to enable a substantially parallel advancement of the crates 8 with respect to the filled trays 5. Downstream of the third loading station 16 the third supply line 17 and the first outlet line 13 converge towards one another to determine the positioning of each filled tray 5 inside a crate 8 coming from the third loading station 16.

In detail, the convergence zone between the first outlet line 13 and the third advancement line 17 is defined by an inclined terminal tract (not visible in the figures of the drawings) which leads the filled trays 5 towards the crates 8 sliding along the third advancement line 17.

A second outlet line 18 extends from the convergence zone of the first outlet line 13 and the third advancement line 17 for advancing the crates 8 with the filled trays 5, as illustrated.

With the aim of optimising the supply of the trays 5 to the first advancement line 9, reducing the waiting time between the depositing of a tray 5 and the next in supply, the loading station 4 is provided with the above-mentioned loading device 1.

As shown in figures from 2 to 4, the loading device 1 comprises- means for transferring 19 for displacing at least a tray 5 from the collection zone 20, corresponding to the rest surface 4a in the loading station 4, to a depositing zone 21, in which the tray 5 is resting on the first advancement line 9. Preferably the rest plane 4a of the collection zone 20 is predisposed to receive, one after another, the trays 5 coming from a storage feeder 22 (figure 1) located upstream of the loading station 4.

Still with reference to figures from 2 to 4, the loading device 1 exhibits a stationing zone 23 for temporary stationing of at least a tray 5 coming from the collection zone 20. The stationing zone 23 is advantageously interposed between the collection zone 20 and the depositing zone 21 so that the stationary period of a tray 5 in the stationing zone 23 enables a positioning of a further tray 5 in the collection zone 20 during the simultaneous advancement of a further tray 5 along the first advancement line 9.

With reference to the solution illustrated in the accompanying figures, the stationing zone 23 is arranged adjacent of the collection zone 20, preferably on the same lie plane as the rest plane 4a thereof. The stationing zone 23 is advantageously at least partially superposed on the depositing zone 21 which lies below it, in a plane that substantially coincides with a lie plane of the first advancement line 9 defined by an upper branch 10a of the conveyor belt 10.

The stationing zone 23 is defined by at least a support organ 24 which at least partially projects from the device 1.

In particular, the support organ 24 is operatively associated to the rest plane 4a of the collection zone 20 and is mobile between a stationary position in which it projects from the collection zone 20 above the depositing zone 21 in order to support at least a tray 5 coming from the collection zone 20, and a release position, in which the support organ 24 is retracted with respect to the depositing zone 21 in order to enable depositing of the tray 5 in the stationary zone.

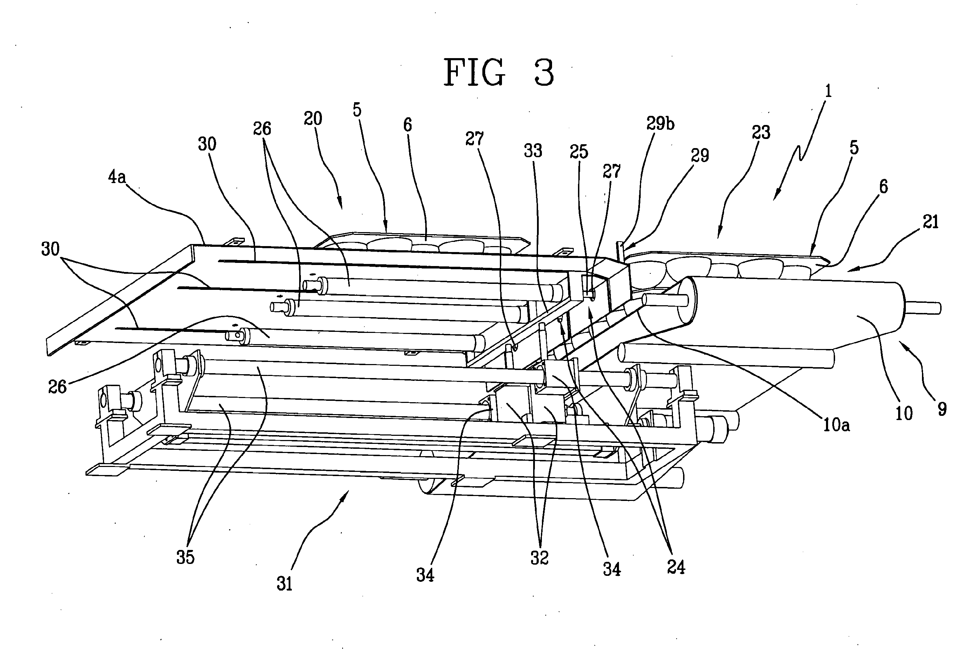

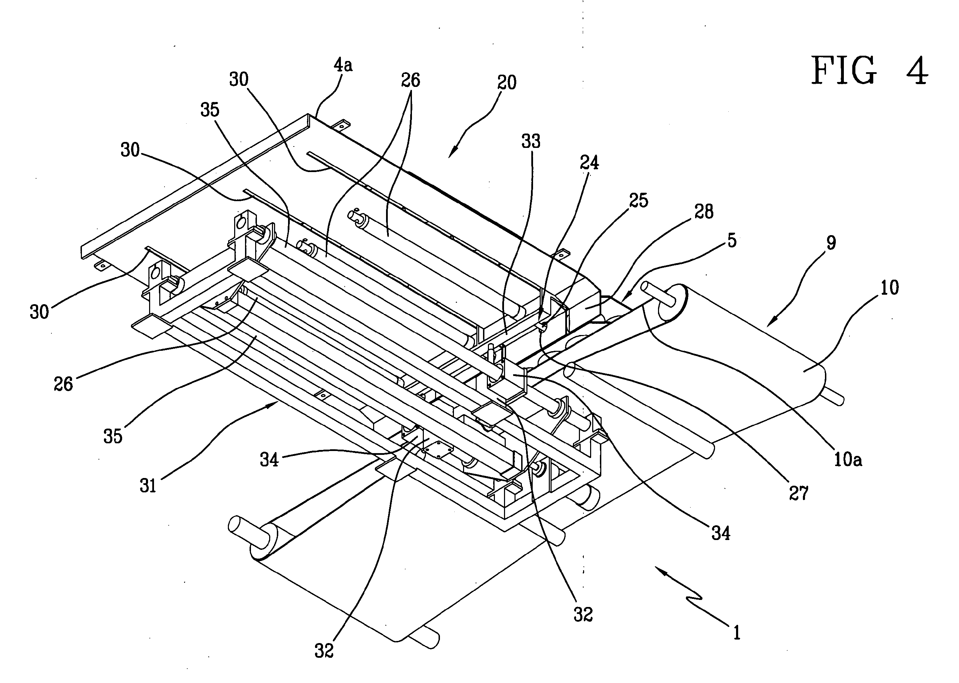

As can be seen in figures 2 and 4, the support organ 24 comprises a plurality of support bars 25, each part of respective actuators 26 (figures 3 and 4), preferably linear, which are inferiorly associated to the rest plane 4a of the collection zone 20. The support bar 25 of each actuator 26 is mobile along a respective opening 27 afforded in a lateral edge 28 of the rest surface 4a facing the stationing zone 23 and the depositing zone 21.

When the support organ 24 is in the stationed position, the support bars 25 are completely extended towards the conveyor belt 10 in such a way that the stationing zone 23 completely covers the depositing zone 21. On the contrary, when the support organ 24 is in the release position, the support bars 25 retract with respect to the lateral edge 28 of the rest plane 4a of the collection zone 20 to enable a depositing by force of gravity of the tray 5 present in the stationing zone 23.

Still with reference to figures from 2 to 4, the above-mentioned means for transferring 19 comprise at least a pusher organ 29 operatively associated to the rest plane 4a of the collection zone 20 to displace at least a tray 5 lying on the rest surface 4a from the rest surface 4a to the stationing zone 23.

The pusher organ 29 advantageously comprises a plurality of pusher cursors 29a which are mobile at the rest surface 4a between a first portion, in which the tray 5 lying in the collection zone 20 is interposed between the pusher cursors 29a and the stationing zone 23, and a second position, in which the pusher cursors 29a are arranged at the lateral side 28 of the rest surface 4a and the tray 5, displaced by action of the pusher cursors 29a, is situated in the stationing zone 23 above the support bars 25. Each pusher cursor 29a is advantageously mobile between the first and second positions, along a slot 30 afforded through the rest surface 4a of the collection zone 20.

In addition, each pusher cursor 29a is further mobile, through the respective slot 30, between an operative position, in which at least a contrast appendage 29b of the pusher cursor 29a projects at least partially through the corresponding slot 30 superiorly with respect to the rest surface 4a, and a non-operative position, in which the contrast appendage 29b of the respective pusher cursor 29a does not project from the slot 30.

In more detail, each pusher cursor 29a is mobile along a closed ring circuit in which it is situated in the operative position in order to translate from the first to the second positions and displace, through the contrast appendage 29b, a tray 5 from the collection zone 20 to the stationing zone 23, and is arranged in the non-operative position in order to translate from the second position to the first position, without intercepting further trays 5 newly arranged in the collection zone 20. In this way the pusher organs 29a are able to move the continuously-loaded trays 5 towards the stationing zone 30, returning, below the rest surface 4a, in order to newly reposition in the initial pushing position, i.e. the first position.

The cursors 29a are advantageously displaced simultaneously between the first and the second positions and between the operative and non-operative positions in order that during the pushing stage an entire lateral edge 5a of the tray 5 to be moved is involved.

With reference to figures 3 and 4, the pusher organ 29 comprises means for moving 31 which operate, below the rest surface 4a of the collection zone 20, to move the cursors 29a transversally of the rest plane 4a between the operative and non-operative positions and slidably substantially parallel to the rest plane 4a between the first and second positions.

In more detail, the means for moving 31 preferably comprise- two linear actuators 32 inferiorly engaged to a support crossbar 33 to which the pusher cursors 29a of the pusher organ 29 are superiorly fixed. The actuators 32 can be activated to move the pusher cursors 29a between the operative and non-operative positions.

The means for moving 31 further comprise a plurality of support cursors 34 which are slidably engaged on respective support bars 35 which develop below the rest surface 4a, substantially parallel thereto and to the slots 30. The support cursors 34 support the actuators 32 and translate together with them along the respective support bars 35 on command of suitable means for activating (not visible in the figures of the drawings). The device 1, described above in prevalently structural terms, functions as follows.

When a tray 5 is placed on the rest surface 4a of the collection zone 20, the pusher organ 29 is activated to move from the first into the second position to cause the displacement of the pusher cursors 29a along the slots 30 towards the stationing zone 23. During the translation, the contrast appendages 29b of the pusher cursors 29a intercept the tray 5 arranged in the collection zone 20 and push it in the direction of the stationing zone 23.

In the meantime the support bars 25 of the support organ 24 are kept extended to support the tray 5 displaced by the pusher cursors 29a. When the pusher cursors 29a reach the lateral edge 28 of the rest surface 4a they are stopped in order for the tray 5 to be stationed.

At this point a new tray 5 is placed on the rest surface 4a in the collection zone 20 in order to give a continuity to the supply of the trays 5.

Following a control of the presence or absence of any trays 5 in the depositing zone 21, the support organ 24 is displaced from the stationing position to the release position. The support bars 25 are then retracted towards the actuators 26 while the pusher cursors 29a are kept at the lateral edge 28 of the rest surface 4a, i.e. -with the pusher organ 29 in the second position.

The displacement of the support organ 24 towards the release position and the presence of the pusher organ 29 in the second position causes the fall of the tray 5 from the stationing zone 23 to the depositing zone 21. In particular, the pusher cursors 29a constitute a barrier which opposes any return of the tray 5 together with the support organ 24 from the stationing position to the release position.

Once the tray 5 previously located in the stationing zone 23 has been deposited, the pusher cursors 29a are displaced from the operative position to the non-operative position to be returned into the first position, without intercepting the tray 5 positioned on the rest surface 4a. The pusher cursors 29a translate substantially below the rest surface 4a from the second into the first position in order to be returned into the operative position once they have passed beyond the tray 5 to be pushed.

The pushing cycle is continuously repeated, while the trays 5 deposited on the first advancement line 9 translate in a distancing direction from the depositing zone 21 towards the convergence zone of the machine 2.

The present invention solves the problems encountered in the prior art and achieves the set aims.

Firstly, the object of the present invention significantly accelerates the process of loading the trays on the advancement line of the machine, as it considerably reduces the distance between the loading zones and ensures a continuity in the tray supply. In other words the above-described loading device enables a tray to be stationed between the advancement line and the collection zone so that the supply of the trays is not penalised by the advancement times and consequently neither is the release of the trays from the depositing zone. Naturally the acceleration of the tray loading leads to a considerable saving in packaging costs.

## Claims

1. A loading device (1) of trays (5), in particular celled trays for packaging vegetable and fruit produce, the device (1) comprising means for transferring (19) for displacing at least a tray (5) from a collection zone (20) to a depositing zone (21), in which the tray (5) that has been collected is placed on an advancement line (9) of a machine (2) for packaging of vegetable or fruit articles, **characterised in that** it comprises at least a temporary stationing zone (23) of at least a tray (5) interposed between the collection zone (20) and the depositing zone (21), the stationing zone (23) housing at least a tray (5) for enabling a positioning of a further tray (5) in the collection zone (20) during the advancement of the at least a tray (5) along the advancement line (9) of the machine (2).

2. The device of claim 1, wherein the collection zone (20) comprises at least a rest plane (4a) for preferably consecutively placing trays (5) to be deposited on the advancement line (9) of the machine (2).

3. The device of claim 2, wherein the stationing zone (23) is arranged adjacent of the collection zone (20).

4. The device of claim 2 or 3, wherein the stationing zone (23) is arranged substantially on a same plane as the rest plane (4a) of the collection zone (20).

5. The device of any one of the preceding claims, wherein the stationing zone (23) is at least partially, and preferably completely, superposed over the depositing zone (21).

6. The device of any one of the preceding claims, wherein the depositing zone (21) is arranged substantially below the stationing zone (23), preferably in a plane that coincides with a lie plane of the advancement line (9) of the machine (2).

7. The device of any one of the preceding claims, wherein the stationing zone (23) is defined by at least a support organ (24) which projects from the device (1).

8. The device of claim 7, wherein the support organ (24) is operatively associated to the rest plane (4a) of the collection zone (20), the support organ (24) being mobile between a stationing position in which it projects from the collection zone (20) to above the depositing zone (21) in order to define the stationing zone (23) and to support at least a tray (5), and a release position in which the support organ (24) is retracted from above the depositing zone (21) in order to enable the depositing of the tray (5) in the depositing zone (21).

9. The device of claim 8, wherein the support organ (24) comprises a plurality of mobile support bars (25) each being a part of respective preferably linear actuators -(26) associated to the rest plane (4a) of the collection zone (20).

10. The device of claim 9, wherein each of the actuators (26) is operatively arranged inferiorly of the rest plane (4a) of the collection zone (20) and the support bar (25) is mobile through at least a respective opening (27) afforded in a lateral edge (28) of the rest surface (4a) nearest the depositing zone (21).

11. The device of any one of claims from 2 to 10, wherein the means for transferring (19) comprise at least a pusher organ (29) which is operatively associated to the rest plane (4a) of the collection zone (20) in order to displace at least a tray (5) lying on the rest surface (4a) from the collection zone (20) to the stationing zone (23).

12. The device of claim 11, wherein the pusher organ (29) comprises at least a pusher cursor (29a), preferably a plurality of pusher cursors (29a), which are slidable on the rest surface (4a) between a first position, in which the tray (5) lying in the collection zone (20) is interposed between the at least a pusher cursor (29a) and the stationing zone (23), and a second position, in which the at least a pusher cursor (29a) is arranged at the stationing zone (23) and the displaced tray (5) is located in the stationing zone (23).

13. The device of claim 12, wherein the at least a pusher cursor (29a) is mobile along a slot (30) afforded in the rest surface (4a) of the collection zone (20).

14. The device of claim 13, wherein the at least a pusher cursor (29a) is mobile, through the slot (30) between an operative position, in which at least a contrast appendage (29b) of the pusher cursor (29a) projects at least partially through-the- slot (30) superiorly of the rest surface (4a), and a non-operative position, in which the contrast appendage (29b) of the pusher cursor (29a) does not project superiorly of the rest surface (4a).

15. The device of claim 14, wherein the at least a pusher cursor (29a) is mobile along a closed ring circuit in which the cursor (29a) is positioned in the operative position for translating from the first into the second position and for displacing the tray (5), located in the collection zone (20), from the collection zone (20) to the stationing zone (23), and is positioned in the non-operative position for translating from the second position into the first position, without intercepting further trays (5) arranged in the collection zone (20).

16. The device of claim 14 or 15, wherein the pusher organ (29a) comprises means for moving (31) which operate inferiorly of the rest surface (4a) in order to displace the cursor (29a) between the operative and non-operative positions, and slidably between the first and the second positions.

17. The device of claim 16, wherein the means for moving (31) of the pusher organ (29a) comprise:
at least an actuator (32), preferably a linear actuator, inferiorly engaged to the pusher cursor (29a) in order to displace the cursor (29a) between the operative and non-operative positions;
at least a support cursor (34) slidably engaged on a support bar (35) developing inferiorly of the rest surface (4a), substantially parallel to the slot (30), the actuator (32) being associated to the support cursor (34).

18. The device of claim 11 when it depends on any one of claims from 8 to 10, wherein the support organ (24) and the means for transferring (19) are operatively connected to determine displacement of the tray (5) from the stationing zone (23) to the depositing zone (21).

19. A machine (2) for packaging articles (3), in particular vegetable and fruit articles, comprising:
a first loading station (4) for supplying trays (5) each exhibiting a substantially flat structure (6) and at least a cell (7) for receiving an article (3) to be packed;
at least a first advancement line (9) of the trays (5) supplied by the first loading station (4);
a second loading station for supplying articles (3) to be housed on the trays (5);
a second advancement line (11) of the articles (3) supplied by the second loading station, the first advancement line (9) and the second advancement line (11) converging towards one another in order to determine a housing of the articles (3) in the trays (5);
a first outlet line (13) extending from the conveyor zone of the first advancement line (9) and the second advancement line (11) for advancing the trays (5) provided with the articles (3);
a third loading station (16) for supply containing crates (8) of the trays (5);
a third advancement line (17) of the crates (8) supplied by the third loading station (16), the third advancement line (17) and the first outlet line (13) converging towards one another in order to place each tray (5) bearing the articles (3) internally of a crate (8);
a second outlet line (18) for advancing the crates (8) with the trays (5);
**characterised in that** the first loading station (4) is provided with a loading device (1) according to any one of claims from 1 to 18.
